# EUROPÄISCHE PATENTSCHRIFT

(11) **EP 3 150 314 B1**
(45) Veröffentlichungstag und Bekanntmachung des Hinweises auf die Patenterteilung: **05.09.2018**
(21) Anmeldenummer: 16188867.2
(22) Anmeldetag: 15.09.2016
(51) Int. Cl.: B23C 5/10

(54) **SCHAFTFRÄSER**
MILL
FRAISE À QUEUE

(30) Priorität: 30.09.2015 DE 102015116624
(43) Veröffentlichungstag der Anmeldung: 05.04.2017
(73) Patentinhaber: Haimer GmbH, 86568 Igenhausen (DE)
(72) Erfinder: HAIMER, Franz-Josef, 86568 Igenhausen (DE); SANHIETER, Reinhold, 86558 Hohenwart (DE)
(74) Vertreter: Charrier Rapp & Liebau

(56) Entgegenhaltungen:
- WO-A1-2009/107235
- WO-A2-2012/111004
- AT-U1- 014 275
- DE-A1-102014 103 103
- DE-B4- 10 325 600
- DE-B4-102005 002 698
- DE-U1-202012 008 940
- US-A1- 2010 196 108

## Beschreibung

Die Erfindung betrifft einen Schaftfräser zur spanabhebenden Bearbeitung von metallischen Werkstoffen, insbesondere Stahl und Titan, nach dem Oberbegriff des Anspruchs 1. Ein derartiger Schaftfräser geht beispielsweise aus der DE 20 2012 008940 U1 hervor. Aus der DE 37 06 282 A1 ist ein Schaftfräser bekannt, welcher einen Befestigungsabschnitt und einen Schneidbereich aufweist. Der Schneidbereich wird durch einen rotationssymmetrischen Kern und um den Kern angeordnete vier helixförmig um eine Rotationsachse des Vollhartmetall-Schaftfräsers verlaufende Schneiden gebildet, wobei die Schneiden zudem einstückig mit dem Kern verbunden sind. Um eine spanabhebende Bearbeitung sowohl ein Umfangs- wie auch Stirnfräsen zu ermöglichen, weisen die vier Schneiden jeweils eine umfangsseitige Hauptschneide und eine Nebenschneide an einer freien Stirnseite des Schneidbereichs auf. Hierdurch wird erreicht, dass sich neben dem Umfangsfräsen mit der Stirnseite des Vollhartmetall-Schaftfräsers beispielsweise auch Planfräs-Operationen durchführen lassen. Bei derartigen Schaftfräsern besteht jedoch der Nachteil, dass sie für Bohrbearbeitungen, also eine spanabhebende Bearbeitung mit den Nebenschneiden bei einer Vorschubrichtung entlang der Rotationsachse des Schaftfräsers, nicht geeignet sind, da die Nebenschneiden oftmals nicht die gewünschte Stabilität und Standfestigkeit aufweisen. Zudem ist die Geometrie sowohl der Nebenschneiden als auch der Spannuten an der Stirnseite des Fräsers nicht für Bohroperationen geeignet, da die Schneidfunktion im Bereich des Zentrums nicht gewährleistet ist und die Späne beim Bohren nicht seitlich ausgeworfen werden können. Handelsübliche Fräser sind entsprechend nicht oder nur bedingt für einer axiale Spanabfuhr bei Bohrarbeiten, also entlang der Spannuten geeignet, da die Spanräume zu schnell verstopfen.

Aufgabe der Erfindung ist es daher, einen einfach zu fertigenden und für die Bohrbearbeitung optimierten Schaftfräser zu schaffen.

Diese Aufgabe wird durch einen Schaftfräser, insbesondere aus Vollhartmetall, mit den Merkmalen des Anspruchs 1 gelöst. Vorteilhafte Ausgestaltungen der Erfindung sind in den Unteransprüchen angegeben.

Vorab sei klargestellt, dass ein Befestigungsabschnitt des Schaftfräsers nicht notgedrungen als zylindrischer Spannabschnitt ausgebildet sein muss. Unter dem Begriff "Schaft" kann jegliche Art von Koppelstelle verstanden werden, mit der der Schneidbereich mit einem separaten Werkzeughalter verbunden ist. Die Koppelstelle kann beispielsweise auch konisch sein, ein Gewinde tragen oder Spannflächen umfassen. Der Spannabschnitt kann sogar als Bohrung im Schneidbereich ausgeführt sein, die auf einem komplementären Zapfen des Werkzeughalters aufgenommen wird.

Unter Vollhartmetallfräsern werden Fräser verstanden, bei denen die spanabhebenden Schneiden fester Bestandteil des Werkzeugkörpers sind. Als Grundmaterial dieses Fräsers sind alle Schneidstoffe zu verstehen, die zum Zerspanen hochfester Werkstoffe geeignet sind, also neben Stählen beispielsweise auch keramische Materialien, PKD und Pulvermischungen.

Der erfindungsgemäße Schaftfräser zeichnet sich dadurch aus, dass mindestens eine Schneide an der Stirnseite des Schneidbereichs eine einzige, ebene oder stetig gekrümmte Stirnfläche (bzw. Freiwinkel) aufweist, welche die Schneide in Längsrichtung des Schaftfräsers an der Stirnseite begrenzt. Durch diese genau eine Stirnfläche an mindestens einer Schneide an der Stirnseite des Schneidbereichs wird eine einzige Freifläche gebildet, welche gegenüber mehrfachen Freiflächen mit verschiedenen Freiwinkeln eine besonders stabile und für die besonderen Anforderungen des Bohrens und auch des Fräsens mittels des Schaftfräsers geeignete Stabilität und Wärmeabführung ermöglicht. Zudem ist eine derartige Ausgestaltung durch die eine Stirnfläche auch besonders einfach herzustellen und bei Bedarf nachzuschleifen, da nur eine Fläche mit einem Winkel bearbeitet werden muss.

Außerdem zeichnet sich der Schaftfräser trotz "bohroptimierter" Geometrie durch hervorragende Fräsleistung mit ruhigem Lauf aus. Die spezielle Geometrie erweist sich auch für die Fräsbearbeitung als sehr robust. Intensive Recherchen und Studien mit Fräsversuchen haben gezeigt, dass die Fräser aus dem Stand der Technik nicht universell genug bei verschiedenen Materialien funktionieren. Der erfindungsgemäße Schaftfräser zeichnet sich durch hohe universelle Einsetzbarkeit und Fräsleistung in den verschiedensten Materialien und Anwendung aus, z.B. Schrupp- und Schlichtbearbeitung, Rampen, Tauchen und Nuten.

In einer vorteilhaften Ausführungsform weist die Stirnfläche jeder Schneide an der Nebenschneide einen Freiwinkel zwischen 5° und 7°, insbesondere gleich 6°, zu einer zu der Rotationsachse des Schaftfräsers senkrechten Ebene auf. Hierdurch kann insbesondere zusammen mit der beschriebenen genau einen Stirnfläche der Schneiden an der Stirnseite eine besonders stabile Nebenschneide mit einer hohen Abtragsleistung und Standfestigkeit erreicht werden.

Bei Betrachtung von der vorderen Stirnseite des Schneidbereichs des Schaftfräsers kann mindestens eine Nebenschneide zudem zumindest abschnittsweise einen gekrümmten, insbesondere konkaven Verlauf aufweisen, wodurch eine besonders vorteilhafte Spanführung in Zusammenhang mit den oben genannten Merkmalen erreicht wird.

Bevorzugt kann mindestens eine Nebenschneide in einem radial äußeren Bereich einen Vormittestand aufweisen. Ein Vormittestand ist dadurch gekennzeichnet, dass die zumindest eine Nebenschneide so ausgebildet ist, dass sie eine gedankliche Verbindung des der Stirnseite am nächsten liegenden Endpunktes der Hauptschneide, also dem Übergang von der Haupt- zur Nebenschneide, mit dem Mittelpunkt in Drehrichtung überragt. Vereinfacht gesagt bedeutet das, dass beide Schneiden vor der Rotationsachse stehen und sich ihre Schneiden in Richtung des Zentrums nicht an den Spitzen begegnen sondern sich teilweise überlappen.

Insbesondere kann zur Erhöhung der Schnittleistung der Nebenschneide bei Bohr-Operationen vorgesehen sein, dass an der Stirnseite des Schneidbereichs eine Ausspitzung des Kerns zwischen zwei aneinander angrenzenden Schneiden vorgesehen ist, welche einen Winkel von 30° bis 40° gegenüber der Rotationsachse des Schaftfräsers aufweist. Durch diese starke Ausspitzung des Kerns zwischen zwei aneinander angrenzenden Schneiden wird eine besonders gute Spanabfuhr ermöglicht, wobei trotz der Ausspitzung der Kern und die Schneiden im Bereich der Stirnseite des Schneidbereichs eine hohe Stabilität aufweisen.

Unter Ausspitzung im Sinne der Erfindung ist jede Ausgestaltung umfasst, mit welcher das Material des Kerns und eventuell auch der Schneiden im Bereich der Stirnseite des Schneidbereichs in Umfangsrichtung begrenzt lokal zwischen den Schneiden reduziert wird. Als Kern ist der rotationssymmetrische Kernbereich eines Schaftfräsers im Schneidbereich zu verstehen. Die Schneiden sind um diesen Kern herum angeordnet und mit dem Kern einstückig ausgebildet. Der Boden jeder Spanabführnut, welche in Umfangsrichtung zwischen den Schneiden ausgebildet sind, wird dabei durch den Kern begrenzt.

Besonders bevorzugt kann die Ausspitzung als in Richtung von dem Befestigungsabschnitt zu der Stirnseite des Schneidbereichs sich der Rotationsachse des Schaftfräsers annähernde Aussparung im Bereich der Stirnseite des Schneidbereichs ausgebildet sein. Eine derartige Aussparung kann beispielsweise besonders einfach durch Schleifen erreicht werden.

Um eine spanabhebende Bearbeitung an der gesamten Stirnseite beim Bohren und Fräsen durch mindestens eine Nebenschneide zu ermöglichen, kann sich die Aussparung in Radialrichtung des Schneidbereichs im wesentlichen bis zur Rotationsachse des Schaftfräsers erstrecken und die Nebenschneide im Bereich der Rotationsachse des Schaftfräsers begrenzen.

In einer besonders vorteilhaften Ausführungsform sind die Schneiden zumindest an der Stirnseite des Schneidbereichs ungleichmäßig verteilt angeordnet. Hierdurch kann die Stabilität der Schneiden erhöht werden, da Schneiden mit einem geringen Zwischenwinkel gegenseitig stabilisierend wirken. Um die Schwingungsneigung zu reduzieren, können die Schneiden zudem unterschiedliche Drallwinkel aufweisen, so dass die Schneiden im Schneidbereich außerhalb der Stirnseite zumindest abschnittsweise auch gleichverteilt angeordnet sein können.

Besonders vorteilhaft kann es sein, dass der Schneidbereich insgesamt vier Schneiden aufweist, von denen eine erste Schneide und eine dritte Schneide sowie eine zweite Schneide und eine vierte Schneide einander diametral gegenüberliegen, wobei die Ausspitzung zwischen der zweiten Schneide und der dritten Schneide sowie zwischen der ersten Schneide und der vierten Schneide vorgesehen ist und in Umfangsrichtung des Schneidbereichs der Winkel zwischen der ersten Schneide und der vierten Schneide und zwischen der zweiten Schneide und der dritten Schneide größer 90° und kleiner 110°, insbesondere gleich 100°, ist. Hierdurch wird gewährleistet, dass trotz der starken Ausspitzung zwischen der zweiten Schneide und der dritten Schneide sowie der ersten Schneide und der vierten Schneide die Schneiden durch den geringeren Winkelabstand zwischen der ersten Schneide und der zweiten Schneide sowie zwischen der dritten Schneide und der vierten Schneide die Schneiden sich gegenseitig stützen und hierdurch eine hohe Stabilität erreicht wird. Hierdurch ist der Schaftfräser besonders gut geeignet, um Bohrungen auch in schwer zerspanbaren Werkstoffen vorzunehmen. Dies ermöglicht es insbesondere zusammen mit der beschriebenen Ausspitzung und der genau einen Stirnfläche der Schneiden an der Stirnseite eine besonders stabile Nebenschneide mit einer hohen Abtragsleistung und Standfestigkeit zu schaffen und die Spanabfuhr zu gewährleisten.

Um die Bohr- und Fräsleistung des Schaftfräsers weiter zu steigern und die Spanabfuhr zu erleichtern, kann zwischen der ersten Schneide und der zweiten Schneide sowie zwischen der dritten Schneide und der vierten Schneide eine weitere Ausspitzung vorgesehen sein, welche einen Winkel von 20° bis 40° gegenüber der Rotationsachse des Schaftfräsers aufweist.

Besonders vorteilhaft für die Bohrleistung kann es zudem sein, wenn die Schneiden an der Stirnseite des Schneidbereichs einen Hohlschliff aufweisen, also die Nebenschneiden an der Stirnseite in Richtung von der Rotationsachse radial nach außen in Längsrichtung des Schneidbereichs vorstehen, wodurch die Stirnfläche eine konkave Ausgestaltung aufweist.

Um die Spanabtragsleistung zusätzlich zu erhöhen, kann vorgesehen sein, dass der Kern des Schneidbereichs zwei konische Abschnitte mit unterschiedlicher Konizität aufweist. Ausgehend von der Stirnseite des Schneidbereichs kann ein erster konischer Teil vorgesehen sein, welcher sich von einem Durchmesser, der 35% - 45% des Schneidbereichsdurchmessers entspricht, bis zu einem Durchmesser, welcher 45% - 60%, vorzugsweise 50% - 55%, des Schneidbereichsdurchmessers entspricht, erweitert. Dieser erste konische Teil kann sich in Längsrichtung des Schneidbereichs über eine Länge des 0,25-fachen bis ganzen Länge des Schneidbereichsdurchmessers erstrecken. An diesen ersten konischen Teil kann sich unmittelbar ein zweiter konischer Bereich anschließen, welcher sich entlang des nutzbaren Schneidenbereichs auf 50% - 70%, vorzugsweise 55% des Schneidbereichsdurchmessers verbreitert. Wobei der erste konische Bereich stetes so ausgebildet ist, dass er eine größere Steigung als der zweite konische Bereich aufweist und der Durchmesser des ersten konischen Bereichs nicht größer wird als der Durchmesser des zweiten konischen Bereichs.

Der erfindungsgemäße Fräser kann im Befestigungsabschnitt zudem mit Ausprägungen für eine Auszugssicherung vorgesehen sein, zum Beispiel in Form einer Weldon- oder Whistle-Notch-Fläche oder auch in Form einer schaftseitig beginnenden Sperrnut, wie in der WO 2007118626 A1 beschrieben oder in Form eines aus dem Befestigungsabschnitt hervorragenden Sperrelements.

Weitere Besonderheiten und Vorzüge der Erfindung ergeben sich aus der folgenden Beschreibung eines bevorzugten Ausführungsbeispiels anhand der Zeichnungen. Es zeigen:
- **Fig. 1**: eine Seitenansicht auf einen Vollhartmetall-Schaftfräser mit einem Schneidbereich und einem Befestigungsabschnitt;
- **Fig. 2**: eine Detailansicht des Vollhartmetall-Schaftfräsers aus Figur 1 im Bereich einer freien Stirnseite des Schneidbereichs;
- **Fig. 3**: eine Schnittansicht des Vollhartmetall-Schaftfräsers von Figur 1 entlang der Schnittlinie C-C;
- **Fig. 4**: eine Vorderansicht auf die freie Stirnseite des Vollhartmetall-Schaftfräsers aus Figur 1;
- **Fig. 5**: eine Schnittansicht des Vollhartmetall-Schaftfräsers im Bereich der freien Stirnseite des Schneidbereichs entlang der Schnittlinie D-D von Figur 4;
- **Fig. 6**: eine Schnittansicht des Vollhartmetall-Schaftfräsers im Bereich der freien Stirnseite des Schneidbereichs entlang der Schnittlinie E-E von Figur 4;
- **Fig. 7**: eine Detailansicht des Bereichs X von Figur 4;
- **Fig. 8**: eine Seitenansicht des Vollhartmetall-Schaftfräsers mit einer schematischen Darstellung des Kerns des Schneidbereichs;
- **Fig. 9**: eine Seitenansicht eines weiteren Ausführungsbeispiels des Vollhartmetall-Schaftfräsers in Form eines Einschraubfräsers ;
- **Fig. 10**: eine Vorderansicht auf die freie Stirnseite des Vollhartmetall-Schaftfräsers aus Figur 9;
- **Fig. 11**: eine Schnittansicht des Vollhartmetall-Schaftfräsers im Bereich der freien Stirnseite des Schneidbereichs entlang der Schnittlinie F-F von Figur 10;
- **Fig. 12**: eine Schnittansicht des Vollhartmetall-Schaftfräsers im Bereich der freien Stirnseite des Schneidbereichs entlang der Schnittlinie G-G von Figur 10 und
- **Fig. 13**: eine Detailansicht des Bereichs X2 von Figur 10.

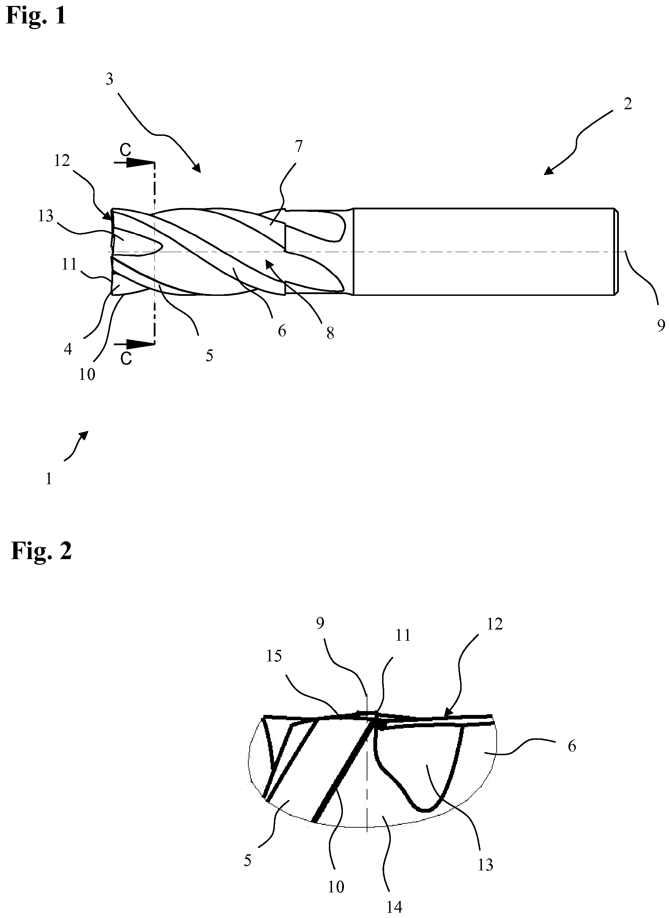

In Figur 1 ist ein Vollhartmetall-Schaftfräser 1 in einer Seitenansicht gezeigt. Der Vollhartmetall-Schaftfräser 1 weist einen Befestigungsabschnitt 2 und einen Schneidbereich 3 mit vier Schneiden 4, 5, 6 und 7 auf. Der Befestigungsabschnitt 2 weist eine zylindrische Form auf und ist zur Aufnahme in einem nicht dargestellten Spannfutter einer Werkstückbearbeitungsmaschine wie beispielsweise eines CNC-Fräsbearbeitungszentrums ausgebildet. An den Befestigungsabschnitt 2 schließt sich der Schneidbereich 3 an, welcher durch einen Kern 8 und die um den Kern 8 angeordneten Schneiden 4, 5, 6 und 7 gebildet wird. Die Schneiden 4, 5, 6 und 7 verlaufen helixförmig um eine Rotationsachse 9 des Vollhartmetall-Schaftfräsers 1 und sind einstückig mit dem Kern 8 ausgebildet.

Jede Schneide 4, 5, 6 und 7 weist jeweils eine umfangsseitige Hauptschneide 10 und eine Nebenschneide 11 an einer Stirnseite 12 des Schneidbereichs 3 auf, welche dazu ausgebildet sind, bei einer Rotation des Vollhartmetall-Schaftfräsers 1 um die Rotationsachse 9 spanabhebend mit dem zu bearbeitenden Werkstück zusammenzuwirken. Zur besseren Übersicht sind die Bezugszeichen für die Hauptschneide 10 und die Nebenschneide 11 bei der Darstellung in den Figuren nicht für alle Schneiden 4, 5, 6 und 7 eingetragen, jede Schneide 4, 5, 6 und 7 verfügt jedoch über sowohl eine Hauptschneide 10 als auch eine Nebenschneide 11.

Im Bereich der Stirnseite 12 des Schneidbereichs 3 ist zudem zumindest eine Ausspitzung 13 des Kerns 8 vorgesehen. Durch diese Ausspitzung 13 wird der Kern 8 in Umfangsrichtung des Vollhartmetall-Schaftfräsers 1 lokal begrenzt zwischen den Schneiden 5 und 6 im Querschnitt reduziert.

In Figur 2 ist der Vollhartmetall-Schaftfräser 1 aus Figur 1 in einer Detailansicht im Bereich der Stirnseite 12 des Schneidbereichs 3 dargestellt. Wie der Figur 2 zu entnehmen ist, ist die Ausspitzung 13 als beispielsweise mittels Schleifen erzeugte und in Richtung von dem Befestigungsabschnitt 2 zu der Stirnseite 12 des Schneidbereichs 3 sich der Rotationsachse 9 des Vollhartmetall-Schaftfräsers 1 annähernde Aussparung im Bereich der Stirnseite 12 des Schneidbereichs 3 in einer Spanabführnut 14 zwischen den zwei Schneiden 5 und 6 ausgebildet. Die Spanabführnut 14 ist zwischen jeder der Schneiden 4, 5, 6 und 7 angeordnet und dient der Abführung der von den Hauptschneiden 10 und den Nebenschneiden 11 der Schneiden 4, 5, 6 und 7 erzeugten Späne. Durch die Ausspitzung 13 wird der Querschnitt der Spanabführnuten 14 im Bereich der Stirnseite 12 des Schneidbereichs 3 vergrößert, wodurch Späne insbesondere aus dem zentrumsnahen Bereich der Nebenschneiden 11 besonders gut abtransportiert werden können.

Die in Figur 2 dargestellte Schneide 5 wie auch die weiteren Schneiden 4, 6 und 7, weist einen Freiwinkel 24 von 5° bis 7° und insbesondere 6° auf, dass heißt der Winkel zwischen einer Stirnfläche 15 jeder Nebenschneide 11 und einer zur Rotationsachse 9 senkrechten Ebene beträgt 5° bis 7°, bzw. insbesondere 6°.

Wie zudem zu erkennen ist, weisen die Schneiden 4, 5, 6 und 7 an der Stirnseite 12 des Schneidbereichs 3 einen Hohlschliff auf, das heißt, dass die Schneiden 4, 5, 6 und 7 und damit insbesondere die Nebenschneiden 11 an der Stirnseite 12 in Richtung von der Rotationsachse 9 radial nach außen in Längsrichtung des Schneidbereichs 3 vorstehen, wodurch die Stirnfläche 12 eine konkave Ausgestaltung aufweist.

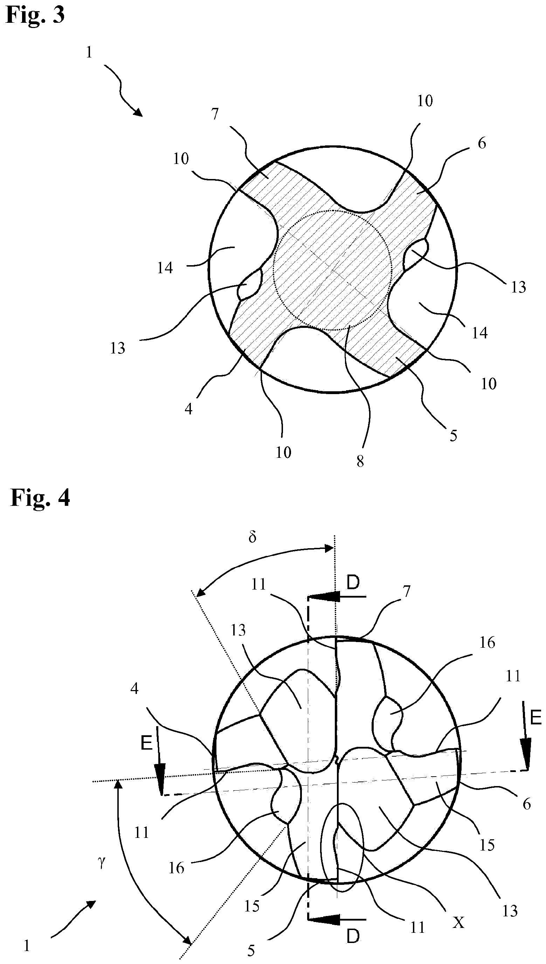

In Figur 3 ist ein Querschnitt des Vollhartmetall-Schaftfräsers 1 entlang der Linie C-C von Figur 1 dargestellt. Wie dort anhand der hilfsweise eingezeichneten Strich-Punkt-Linien zu entnehmen ist, sind die Schneiden 4, 5, 6 und 7 zusammen mit den Hauptschneiden 10 in Umfangsrichtung des Vollhartmetall-Schaftfräsers 1 ungleichmäßig verteilt angeordnet. So liegen zwar eine erste Schneide 4 und eine dritte Schneide 6 sowie eine zweite Schneide 5 und eine vierte Schneide 7 einander diametral gegenüber, entgegen der Umlaufrichtung der Schneiden 4, 5, 6 und 7, also in Figur 3 im Uhrzeigersinn, ist jedoch der Winkel zwischen der ersten Schneide 4 und der anschließenden vierten Schneide 7 und zwischen der dritten Schneide 6 und der anschließenden zweiten Schneide 5 größer als 90°, besonders bevorzugt mit genau 100°, ausgebildet. Das bedeutet, dass damit der Winkel zwischen der dritten Schneide 6 und der vierten Schneide 7 sowie zwischen der ersten Schneide 4 und der zweiten Schneide 5 weniger als 90° und bevorzugt genau 80° aufweist.

Die Schneiden 4, 5, 6 und 7 erstrecken sich in Umfangsrichtung an ihrer Außenseite in etwa über eine Länge, welche dem 0,1- bis 0,2-fachen des Durchmessers des Schneidbereichs 2 (Schneidbereichsdurchmesser) entspricht.

Zwischen der zweiten Schneide 5 und der dritten Schneide 6 sowie zwischen der vierten Schneide 7 und der ersten Schneide 4 ist die Ausspitzung 13 vorgesehen. Durch die Ausspitzung 13 wird der Querschnitt des Schneidbereichs 3 und insbesondere der ersten Schneide 4 in der Spanabführnut 14 zwischen der vierten Schneide 7 und der ersten Schneide 4 sowie der dritten Schneide 6 in der Spanabführnut 14 zwischen der zweiten Schneide 5 und der dritten Schneide 6 reduziert. Durch den oben beschrieben reduzierten Winkel zwischen der ersten Schneide 4 und der zweiten Schneide 5 sowie zwischen der dritten Schneide 6 und der vierten Schneide 7 wird erreicht, dass die Stabilität der ersten Schneide 4 und der dritten Schneide 6 aufgrund der räumlichen Nähe zu der zweiten Schneide 5 bzw. der vierten Schneide 7 nicht verringert ist. Im Bereich näher der Stirnseite 12 des Schneidbereichs 3 wird durch die Ausspitzung 13 auch der Querschnitt des in Figur 3 mittels der punktierten Linie dargestellten im Querschnitt kreisförmigen Kerns 8 reduziert, wie sich aus der folgenden Figur ergibt.

In Figur 4 ist eine Vorderansicht auf die freie Stirnseite 12 des Schneidbereichs 3 des Vollhartmetall-Schaftfräsers 1 gezeigt. Wie auch schon in der Schnittansicht der Figur 3 angedeutet ist, sind die Schneiden 4, 5, 6 und 7 auch an der Stirnseite 12 des Schneidbereichs ungleichmäßig verteilt. Da der Drallwinkel der Schneiden 4, 5, 6 und 7 bei dem gezeigten Ausführungsbeispiel über die Länge des gesamten Schneidbereichs 3 konstant ist, entsprechen die Winkel zwischen den Schneiden 4, 5, 6 und 7 an der Stirnseite 12 denen in Figur 3 gezeigten, der Winkel zwischen der ersten Schneide 4 und der zweiten Schneide 5 sowie zwischen der dritten Schneide 6 und der vierten Schneide 7 ist folglich kleiner als 90° insbesondere 80° wobei sich die erste Schneide 4 und die dritte Schneide 6 sowie die zweite Schneide 5 und die vierte Schneide 7 diametral gegenüberliegen. Diese Ungleichteilung der Schneiden 4, 5, 6 und 7 ist von besonderer Bedeutung im Bereich der Stirnseite 12 des Schneidbereichs 3 und insbesondere im Schneidbereich 3, da hier die Reduzierung des Querschnitts des Kerns 8 des Vollhartmetall-Schaftfräsers 1 durch die Ausspitzung 13 am stärksten ausgeprägt ist, um die zwei im Wesentlichen bis zur Rotationsachse 9 reichenden Nebenschneiden 11 zu bilden und zu begrenzen sowie eine Spanabfuhr von den Nebenschneiden 11 in axialer Richtung nahe der Rotationsachse 9 zu ermöglichen. Dies ist insbesondere bei Bohrbearbeitungen von besonderer Bedeutung, da bei einer Bohrung im Vollmaterial ohne Vorbohrung Material über den gesamten Querschnitt des Schneidbereichs 3 spanabhebend abgetragen werden muss. Die Ausspitzung 13 ist so ausgebildet, dass sie an der Stirnseite 12 des Schneidbereichs 3 an die Rotationsachse 9 bis auf ein Maß heranreicht, welches dem 0,005- bis 0,015-fachen des Schneidbereichsdurchmessers entspricht. In Radialrichtung erstreckt sich die Ausspitzung 13 an der Stirnseite 12 des Schneidbereichs 3 in einer Länge, die dem 0,575- bis 0,75-fachen des Schneidbereichsdurchmessers entspricht. Des Weiteren verlaufen die Flanken der Ausspitzung 13 in der in Figur 4 gezeigten Draufsicht auf die Stirnseite 12 aufeinander zu in einem in der Perspektive erscheinenden Winkel δ von 30° bis 45°, wobei die Spitze in Richtung der Rotationsachse 9 mit einem Radius verrundet ist, welcher dem 0,075- bis 0,125-fachen des Schneidbereichsdurchmessers entspricht.

Wie der Figur 4 weiter zu entnehmen ist, ist zwischen der ersten Schneide 4 und der zweiten Schneide 5 sowie zwischen der dritten Schneide 6 und der vierten Schneide 7 jeweils eine weitere Ausspitzung 16 vorgesehen, die wie auch jede Ausspitzung 13 als beispielsweise mittels Schleifen erzeugte und in Richtung von dem Befestigungsabschnitt 2 zu der Stirnseite 12 des Schneidbereichs 3 sich der Rotationsachse 9 des Vollhartmetall-Schaftfräsers 1 annähernde Aussparung im Bereich der Stirnseite 12 des Schneidbereichs ausgebildet ist. Die weitere Ausspitzung 16 reduziert dabei sowohl den Querschnitt des Kerns 8 des Schneidbereichs 3 als auch den Querschnitt der zweiten Schneide 5 in der Spanabführnut 14 zwischen der ersten Schneide 4 und der zweiten Schneide 5 und den Querschnitt der vierten Schneide 7 in der Spanabführnut 14 zwischen der dritten Schneide 6 und der vierten Schneide 7. Wie der Figur 4 zu entnehmen und in Bezug auf die folgenden Figuren noch näher beschrieben wird, ist jede weitere Ausspitzung 16 weniger stark ausgebildet, als jede Ausspitzung 13, um den Zusammenhalt der ersten Schneide 4 mit der zweiten Schneide 5 sowie der dritten Schneide 6 mit der vierten Schneide 7 nicht zu schwächen. Die weiteren Ausspitzungen 16 erstrecken sich bei Betrachtung von der Stirnseite 12 des Schneidbereichs 3 in Richtung der Nebenschneiden 11 der zweiten Schneide 5 und der vierten Schneide 7 bis zu einem Abstand, der dem 0,1- bis 0,2-fachen des Schneidbereichsdurchmessers entspricht. Zudem ist jede weitere Ausspitzung 16 in Richtung der Rotationsachse 8 mit einem Radius verrundet, welcher dem 0,1- bis 0,3-fachen des Schneidbereichsdurchmesser entspricht. Des Weiteren laufen die Flanken der Ausspitzung 16 in der in Figur 4 gezeigten Draufsicht in einem Winkel γ aufeinander zu, der in der perspektivischen Ansicht einen Wert von 30° bis 45°annehmen kann.

Wie bereits angedeutet, ist die beschriebene Ungleichteilung der Schneiden 4, 5, 6 und 7 im Bereich der Stirnseite 12 des Schneidbereichs 3 von besonderer Bedeutung für die Stabilität der Schneiden 4, 5, 6 und 7 in Zusammenhang mit der Ausbildung der Ausspitzungen 13 und der weiteren Ausspitzung 16. Anders als in Bezug auf Figur 3 beschrieben, kann sich die Ungleichteilung der Schneiden 4, 5, 6 und 7 im Schneidbereich 3 entlang der Rotationsachse 9 ändern, beispielsweise durch unterschiedliche Drallwinkel der Schneiden 4, 5, 6 und 7, so dass auch eine Gleichteilung der Schneiden 4, 5, 6 und 7 in einem Querschnitt außerhalb der Stirnseite 12 vorliegen kann.

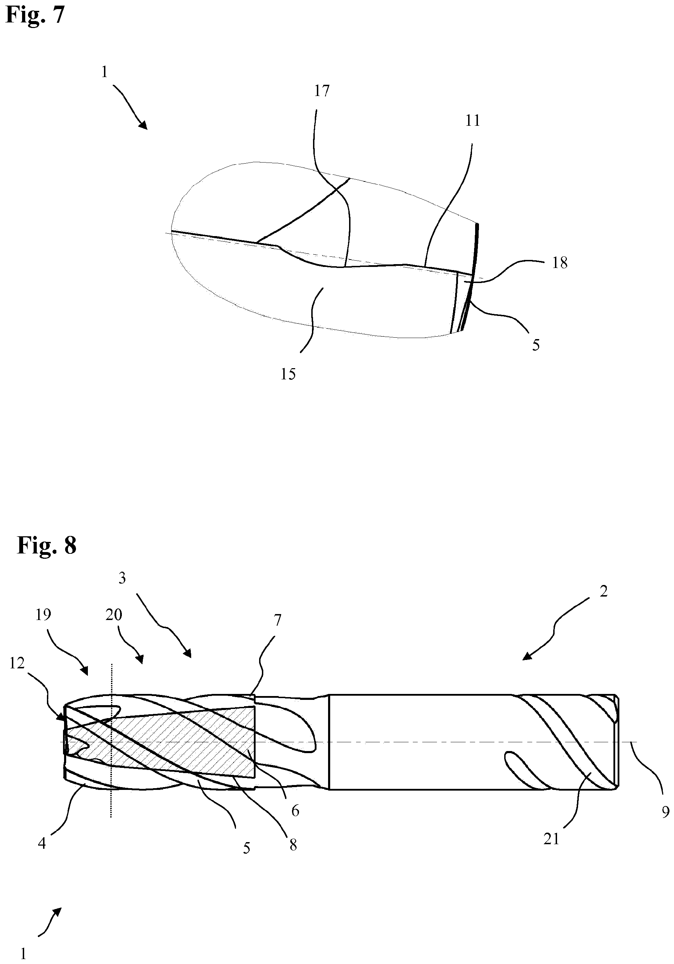

Wie der Figur 4 zudem zu entnehmen ist, wird jede Schneide 4, 5, 6 und 7 an der Stirnseite 12 des Schneidbereichs 3 durch eine einzige, ebene Stirnfläche 15 in Längsrichtung des Vollhartmetall-Schaftfräsers 1, das heißt in Richtung der Rotationsachse 9, an der Stirnseite 12 begrenzt. Wie bereits dargelegt, beträgt der Freiwinkel der Nebenschneiden 11 zwischen 5° und 7° und insbesondere genau 6°. Es ist jedoch auch möglich, diese Stirnfläche 15 stetig gekrümmt auszubilden. In diesem Fall vergrößert sich dieser Winkel der gekrümmten Stirnseite 12 ausgehend von dem Freiwinkel an jeder Nebenschneide 11. Jede Nebenschneide 11 weist zudem einen, zu einer Achse quer zur Rotationsachse, gekrümmten Verlauf auf, wie insbesondere in Bezug auf Figur 7 noch näher erläutert wird. Ein gerader Verlauf ist jedoch auch möglich. Wie der Figur 4 zudem zu entnehmen ist, überlappen sich die gegenüberliegenden Ausspitzungen 13 über die Rotationsachse 9 hinweg um das 0,075-fache bis 0.25-fache des Schneidbereichsdurchmessers.

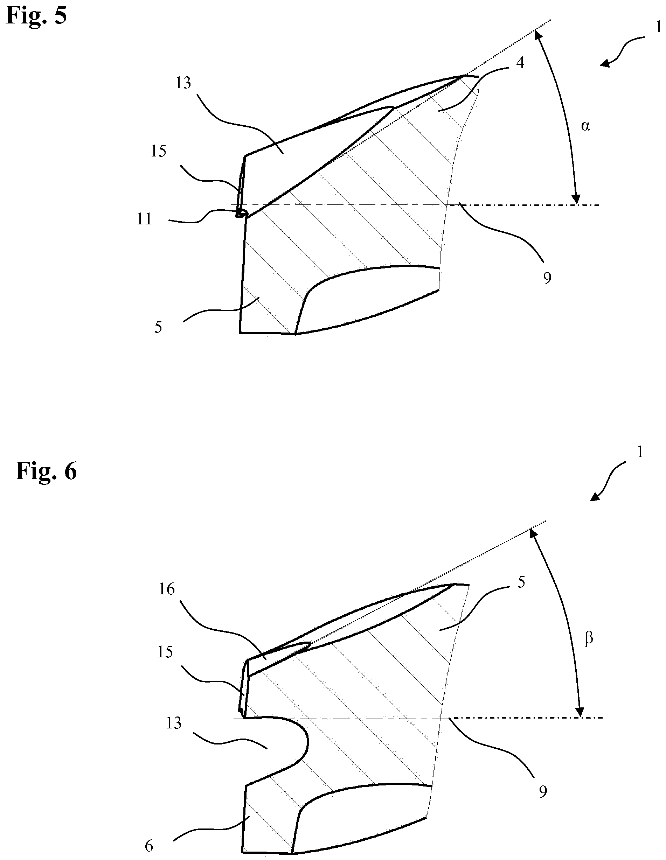

In Figur 5 ist eine Schnittansicht durch den Vollhartmetall-Schaftfräser 1 im Bereich der Stirnseite 12 des Schneidbereichs 3 entlang der Linie D-D von Figur 4 gezeigt. Dieser Schnitt D-D verläuft außermittig durch die erste Schneide 4 mit der Ausspitzung 13 zwischen der vierten Schneide 7 und der ersten Schneide 4 sowie durch die zweite Schneide 5. Die Ausspitzung 13 verläuft dabei entlang der hilfsweise eingezeichneten punktierten Linie in einem Winkel α von 30° bis 40° zu der Rotationsachse 9. Die Erstreckung der Ausspitzung 13 in Richtung der Rotationsachse 9 weist dabei eine Länge auf, die dem 0,2- bis 0,5-fachen des Schneidbereichsdurchmessers entspricht.

In Figur 6 ist eine Schnittansicht durch den Vollhartmetall-Schaftfräser 1 im Bereich der Stirnseite 12 des Schneidbereichs 3 entlang der Linie E-E von Figur 4 gezeigt. Dieser Schnitt E-E verläuft außermittig durch die zweite Schneide 5 mit der weiteren Ausspitzung 16 zwischen der ersten Schneide 4 und der zweiten Schneide 5 sowie durch die dritte Schneide 6. Wie zu erkennen ist, verläuft dabei die weitere Ausspitzung 16 entlang der hilfsweise eingezeichneten punktierten Linie in einem Winkel β von 20° bis 40° zu der Rotationsachse 9. Die weitere Ausspitzung 16 erstreckt sich dabei in Radialrichtung anders als jede Ausspitzung 13 nicht über die Rotationsachse 9 hinweg, die radiale Erstreckung ist folglich kleiner als das 0,5-fache des Schneidbereichsdurchmessers. Die Winkel jeder Ausspitzung 13 und jeder weiteren Ausspitzung 16 zu der Rotationsachse 9 können dabei gleich oder unterschiedlich ausgebildet sein.

In Figur 7 ist eine Detailansicht des Bereichs X von Figur 4 dargestellt. Wie dort zu entnehmen ist, weist die Nebenschneide 11 der zweiten Schneide 5 wie auch jeder weiteren Schneide 4, 6 und 7 bei Betrachtung von der Stirnseite 12 des Schneidbereichs 3 eine Ausbuchtung 17 mit einem gekrümmten, insbesondere konkaven Verlauf auf. Hierdurch werden insbesondere in Zusammenhang mit den oben genannten Merkmalen eine besonders vorteilhafte Spanführung und damit auch eine vorteilhafte Spanabfuhr bei Bohr-Operationen erreicht. Die Ausbuchtung 17 beginnt dabei bei einer Entfernung von der Rotationsachse 9, welche dem 0,2- bis 0,35-fachen des Schneidbereichsdurchmessers entspricht und erstreckt sich in radialer Richtung über eine Länge, welche dem 0,1- bis 0,25-fachen des Schneidbereichsdurchmessers entspricht. Der Radius der Ausbuchtung 17 beträgt das 0,1- bis 0,25-fache des Schneidbereichsdurchmessers.

In Figur 7 ist zudem durch die Strich-Punkt-Linie die Mittellinie der Nebenschneide 11 angedeutet, welche durch die Rotationsachse 9 verläuft. Die Ausbuchtung 17 weist dabei von der Mittellinie einen Abstand auf, der dem 0- bis 0,015-fachen des Schneidbereichsdurchmesser entspricht und der übrige geradlinig verlaufende Teil der Nebenschneide ist von der Mittellinie um eine Länge beabstandet, welche von dem 0,002-fachen des Schnittbereichsdurchmessers entgegen der Umlaufrichtung der zweiten Schneide 5 bis zum 0,01-fachen des Schnittbereichsdurchmessers in Umlaufrichtung der zweiten Schneide 5 reicht. Dieser Abstand von der Mittellinie ist der Vormitteabstand. Da die Blende entlang der Nebenschneide über die Eckfase 18 hinausgeht, entsteht zwischen Eckfase und Hauptschneide eine weitere Fase.

Wie der Detailansicht in Figur 7 weiter zu entnehmen ist, ist am Übergang zwischen den Nebenschneiden 11 und den Hauptschneiden 10 eine Eckfase 18 vorgesehen, wodurch eine bessere Wärmeableitung und höhere Standzeit sowie eine bessere Zentrierung des Vollhartmetall-Schaftfräsers 1 bei Bohr-Operationen erreicht wird.

In Figur 8 ist eine Seitenansicht des Vollhartmetall-Schaftfräsers 1 mit einer der schematischen Darstellung des Kerns 8 des Schneidbereichs 3 gezeigt. Wir dort zu entnehmen ist, weist der Kern 8 des Schneidbereichs 3 zwei konische Abschnitte 19 und 20 mit unterschiedlicher Konizität auf. Ausgehend von der Stirnseite 12 des Schneidbereichs 3 kann ein erster konischer Abschnitt 19 vorgesehen sein, welcher sich von einem Durchmesser, der dem 0,35-fachen des Schneidbereichsdurchmessers entspricht, bis zu einem Durchmesser, welcher dem 0,5-fachen des Schneidbereichsdurchmessers entspricht, erweitert. Dieser erste konische Abschnitt 19 kann sich in Längsrichtung des Schneidbereichs, also entlang der Rotationsachse 9, über eine Länge des 0,25-fachen bis ganzen Schneidbereichsdurchmesser erstrecken. An diesen ersten konischen Abschnitt 19 kann sich unmittelbar ein zweiter konischer Abschnitt 20 anschließen, welcher sich von dem zweiten Durchmesser, welcher dem 0,5-fachen des Schneidbereichsdurchmesser entspricht, bis zu einem Durchmesser, welcher dem 0,55-fachen des Schneidbereichsdurchmesser entspricht, erweitert. Dieser zweite konische Abschnitt 20 kann sich in Längsrichtung des Schneidbereichs über eine Länge erstrecken, welche dem Schneidbereichsdurchmesser entspricht. An dem Befestigungsabschnitt 2 ist zudem eine Auszugssicherung in Form einer schaftseitig von dem freien Ende des Befestigungsabschnitts 2 beginnenden Sperrnut 21 vorgesehen. Zur Ausbildung der Sperrnut 21 wird Bezug genommen auf die WO 2007118626 A1, deren Inhalt hiermit in die Anmeldung aufgenommen wird. Eine alternative Ausgestaltung der Sperrnut könnte eine Whistle-Notch oder Weldon-Nut sein.

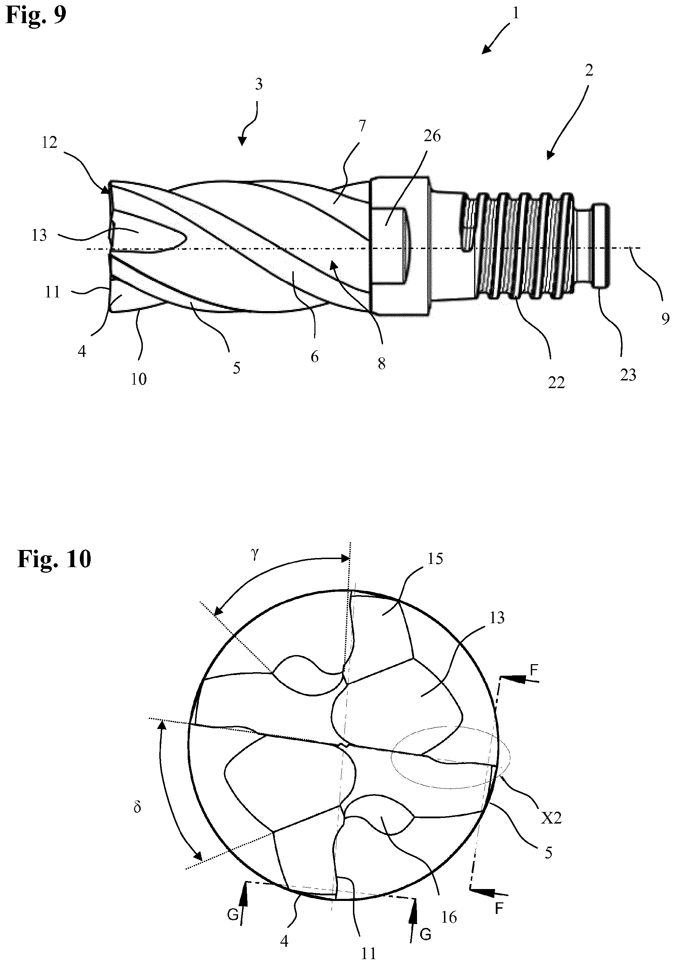

Figur 9 zeigt eine Seitenansicht eines weiteren Ausführungsbeispiels des Schaftfräsers 1 in Form eines Einschraubfräsers. Dieser Schaftfräser 1 unterscheidet sich von dem Schaftfräser der Figuren 1 bis 8 dadurch, dass der Befestigungsabschnitt 2 teilweise konisch ausgebildet ist und ein Gewinde 22 zur Verschraubung mit einer nicht dargestellten Werkzeugaufnahme einer Maschinenspindel aufweist. An dem schaftseitigen freien Ende des Befestigungsabschnitts 2 ist zudem ein weiterer Stützbereich 23 vorgesehen. Um das Einschrauben des Vollhartmetall-Schaftfräsers 1 zu erleichtern, weist der Befestigungsabschnitt 2 Schlüsselflächen 26 auf, welche zum Eingriff von entsprechendem Werkzeug ausgebildet sind. Zu dieser Ausgestaltung des Befestigungsabschnitts 2 wird Bezug genommen auf die DE 10 2012 100 976 und DE 10 2015 112 079, deren Inhalt hiermit in die Anmeldung aufgenommen wird. Die im Übrigen mit der Ausführungsform der Figuren 1 bis 8 gleichen Merkmale sind mit den gleichen Bezugszeichen versehen.

Die Figur 10 zeigt ebenso wie die Figur 4 eine Vorderansicht auf die freie Stirnseite 12 des Schneidbereichs 3 des Schaftfräsers 1, allerdings mit anderen Schnittebenen.

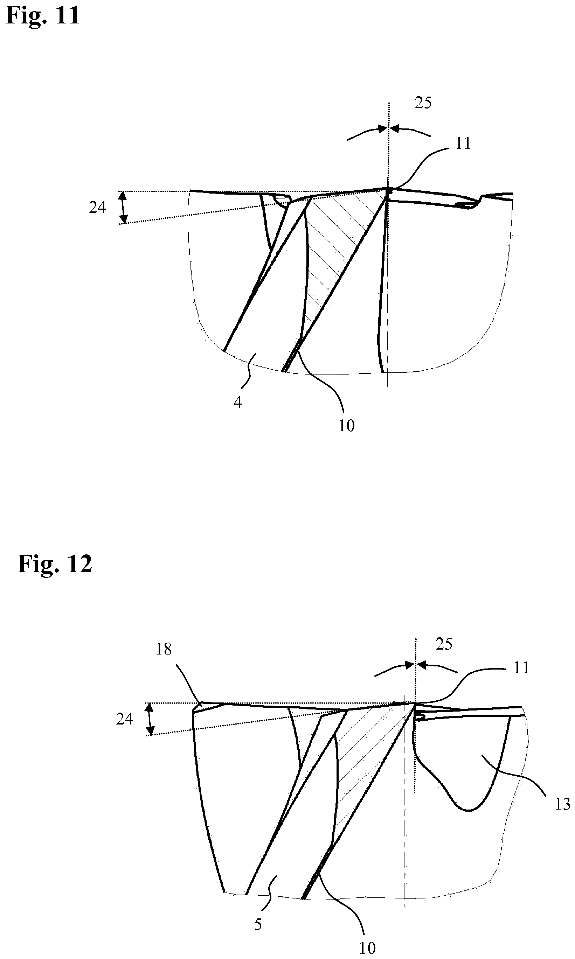

Die Figuren 11 und 12 zeigen eine Schnittansicht der Figur 10 entlang der Schnittlinie F-F und G-G. Gut erkennbar ist hier der bereits in der Beschreibung zur Figur 2 angesprochene, aber nicht gezeigte Freiwinkel 24 und der Stirnspanwinkel 25. Der Stirnspanwinkel 25 beträgt dabei zwischen 3° und -3°, vorzugsweise zwischen 1,5° und -1,5°, höchst vorzugsweise 0°.

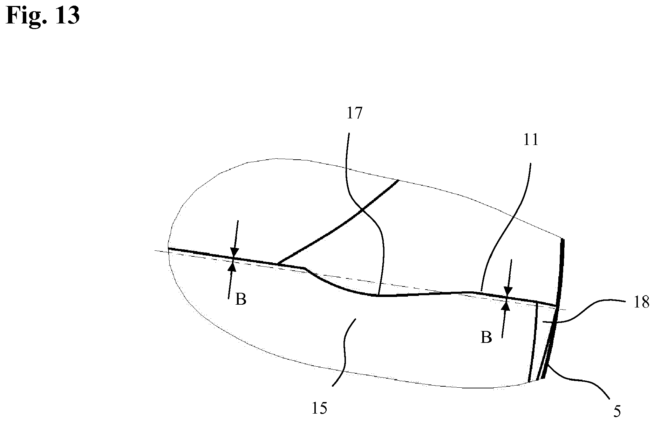

Figur 13 zeigt eine Detailansicht des Bereichs X2 von Figur 10. Zusätzlich zur Darstellung von Figur 7 ist hier der Vormitteabstand B dargstellt.

### Bezugszeichenliste

- 1: Vollhartmetall-Schaftfräser
- 2: Befestigungsabschnitt
- 3: Schneidbereich
- 4: Erste Schneide
- 5: Zweite Schneide
- 6: Dritte Schneide
- 7: Vierte Schneide
- 8: Kern
- 9: Rotationsachse
- 10: Hauptschneide
- 11: Nebenschneide
- 12: Stirnseite des Schneidbereichs
- 13: Ausspitzung
- 14: Spanabführnuten
- 15: Stirnfläche
- 16: Weitere Ausspitzung
- 17: Ausbuchtung
- 18: Eckfase
- 19: Erster konischer Abschnitt des Kerns
- 20: Zweiter konischer Abschnitt des Kerns
- 21: Sperrnut
- 22: Gewinde
- 23: Weiterer Stützbereich
- 24: Freiwinkel
- 25: Stirnspanwinkel
- 26: Schlüsselfläche

## Patentansprüche

1. Schaftfräser (1), vorzugsweise aus Vollhartmetall, mit einem Befestigungsabschnitt (2) und einem Schneidbereich (3), wobei der Schneidbereich (3) durch einen Kern (8) und um den Kern (8) angeordnete drei, vier oder fünf helixförmig um eine Rotationsachse (9) des Schaftfräsers (1) verlaufende Schneiden (4; 5; 6; 7) gebildet wird, von denen jede jeweils eine umfangsseitige Hauptschneide (10) und eine Nebenschneide (11) an einer Stirnseite (12) des Schneidbereichs (3) aufweist, wobei mindestens eine Schneide (4; 5; 6; 7) an der Stirnseite (12) des Schneidbereichs (3) eine einzige, ebene oder stetig gekrümmte Stirnfläche (15) aufweist, welche die Schneide (4; 5; 6; 7) in Längsrichtung des Schaftfräsers (1) an der Stirnseite (12) begrenzt, **dadurch gekennzeichnet, dass** die Nebenschneide (11) jeder Schneide (4, 5, 6, 7) bei Betrachtung von der Stirnseite (12) des Schneidbereichs (3) eine Ausbuchtung (17) aufweist, die bei einer Entfernung von der Rotationsachse (9) beginnt, welche dem 0,2- bis 0,35-fachen des Schneidbereichsdurchmessers entspricht und sich in radialer Richtung über eine Länge erstreckt, welche dem 0,1- bis 0,25-fachen des Schneidbereichsdurchmessers entspricht, wobei der Radius der Ausbuchtung (17) das 0,1- bis 0,25-fache des Schneidbereichsdurchmessers beträgt.

2. Schaftfräser (1) nach Anspruch 1, **dadurch gekennzeichnet, dass** die Stirnfläche (15) jeder Schneide (4; 5; 6; 7) an der Nebenschneide (11) einen Freiwinkel zwischen 5° und 7°, insbesondere gleich 6°, zu einer zu der Rotationsachse (9) des Schaftfräsers (1) senkrechten Ebene aufweist.

3. Schaftfräser (1) nach Anspruch 1 oder 2, **dadurch gekennzeichnet, dass** mindestens eine Nebenschneide (11) einen gekrümmten Verlauf aufweist.

4. Schaftfräser (1) nach einem der Ansprüche 1 bis 3, **dadurch gekennzeichnet, dass** mindestens eine Nebenschneide (11) in einem radial äußeren Bereich einen Vormittestand aufweist.

5. Schaftfräser (1) nach einem der vorhergehenden Ansprüche, **dadurch gekennzeichnet, dass** an der Stirnseite (12) des Schneidbereichs (3) eine Ausspitzung (13) des Kerns (8) zwischen zwei aneinander angrenzenden Schneiden (4; 5; 6; 7) vorgesehen ist, welche einen Winkel von 30° bis 40° gegenüber der Rotationsachse (9) des Schaftfräsers (1) aufweist.

6. Schaftfräser (1) nach Anspruch 5, **dadurch gekennzeichnet, dass** die Ausspitzung (13) als in Richtung von dem Befestigungsabschnitt (2) zu der Stirnseite (12) des Schneidbereichs (3) sich in Richtung der Rotationsachse (8) des Schaftfräsers (1) annähernde Aussparung im Bereich der Stirnseite (12) des Schneidbereichs (3) ausgebildet ist.

7. Schaftfräser (1) nach Anspruch 5 oder 6, **dadurch gekennzeichnet, dass** sich die Ausspitzung (13) in Radialrichtung im Wesentlichen bis zur Rotationsachse (9) des Schaftfräsers (1) erstreckt und die Nebenschneide (11) im Bereich der Rotationsachse (9) des Schaftfräsers (1) begrenzt.

8. Schaftfräser (1) nach einem der vorhergehenden Ansprüche, **dadurch gekennzeichnet, dass** die Schneiden (4; 5; 6; 7) in Umfangsrichtung des Schaftfräsers (1) ungleichmäßig verteilt sind.

9. Schaftfräser (1) nach einem der vorhergehenden Ansprüche, **dadurch gekennzeichnet, dass** der Schneidbereich (3) insgesamt vier Schneiden (4; 5; 6; 7) aufweist, von denen eine erste Schneide (4) und eine dritte Schneide (6) sowie eine zweite Schneide (5) und eine vierte Schneide (7) einander diametral gegenüberliegen und die Ausspitzung (13) zwischen der zweiten Schneide (5) und der dritten Schneide (6) sowie zwischen der ersten Schneide (4) und der vierten Schneide (7) vorgesehen ist, wobei in Umfangsrichtung des Schneidbereichs (12) der Winkel zwischen der ersten Schneide (4) und der vierten Schneide (7) und zwischen der zweiten Schneide (5) und der dritten Schneide (6) größer 90° kleiner 110°, insbesondere gleich 100°, ist.

10. Schaftfräser (1) nach Anspruch 9, **dadurch gekennzeichnet, dass** zwischen der ersten Schneide (4) und der zweiten Schneide (5) sowie zwischen der dritten Schneide (6) und der vierten Schneide (7) eine weitere Ausspitzung (16) vorgesehen ist, welche einen Winkel von 20° bis 40° gegenüber der Rotationsachse (9) des Schaftfräsers (1) aufweist.

11. Schaftfräser (1) nach einem der vorhergehenden Ansprüche, **dadurch gekennzeichnet, dass** die Schneiden (4; 5; 6; 7) an der Stirnseite (12) des Schneidbereichs (3) einen Hohlschliff aufweisen.

12. Schaftfräser (1) nach einem der vorhergehenden Ansprüche, **dadurch gekennzeichnet, dass** der Kern (8) des Schneidbereichs (12) zwei konische Abschnitte (19; 20) mit unterschiedlicher Konizität aufweist.

## Claims

1. End mill (1), preferably made of solid carbide, having an attachment section (2) and a cutting region (3), wherein the cutting region (3) is formed by a core (8) and three, four or five cutters(4; 5; 6; 7) running helically around a rotational axis (9) of the end mill (1)and arranged around the core (8), of which cutters (4; 5; 6; 7) each has respectively one peripheral maincutter (10) and a secondary cutter (11) on an end-face side (12) of the cutting region (3), wherein at least one cutter (4; 5; 6; 7) on the end-face side (12) of the cutting region (3) has a single, flat or continuouslycurved end-face surface (15) which limits the cutter (4; 5; 6; 7) in the longitudinal direction of the end mill (1) on the end-face side (12), **characterised in that** the secondary cutter (11) of each cutter (4, 5, 6, 7), when viewing from the end-face side (12) of the cutting region (3), has a bulge (17) which starts during removal from the rotational axis (9) and corresponds to 0.2 to 0.35 times the cutting region diameter and extends in radial direction over a length which corresponds to 0.1 to 0.25 times the cutting region diameter, wherein the radius of the bulge (17) is 0.1 to 0.25 times the cutting region diameter.

2. End mill (1) according to claim 1, **characterised in that** the end-face surface (15) of each cutter (4; 5; 6; 7) on the secondary cutter (11) has a clearance angle between 5° and 7°, in particular equal to 6°, to a plane vertical to the rotational axis (9) of the end mill (1).

3. End mill (1) according to claim 1 or 2, **characterised in that** at least one secondary cutter (11) has a curved path.

4. End mill (1) according to one of claims 1 to 3, **characterised in that** at least one secondary cutter (11) in a radially outer region has an outside-centre position.

5. End mill (1) according to one of the preceding claims, **characterised in that** on the end-face side (12) of the cutting region (3), point thinning (13) of the core (8) is provided between two cutters (4; 5; 6; 7) adjoining one another and which has an angle of 30° to 40° with respect to the rotational axis (9) of the end mill (1).

6. End mill (1) according to claim 5, **characterised in that** the point thinning (13) is formed in the region of the end-face side (12) of the cutting region (3) as a recess approaching in the direction of the rotational axis (8) of the end mill (1) in the direction from the attachment section (2) to the end-face side (12) of the cutting region (3).

7. End mill (1) according to claim 5 or 6, **characterised in that** the point thinning (13) extends in radial direction essentially as far as the rotational axis (9) of the end mill (1) and limits the secondary cutter(11) in the region of the rotational axis (9) of the end mill (1).

8. End mill (1) according to one of the preceding claims, **characterised in that** the cutters (4; 5; 6; 7) are non-uniformly distributed peripherally of the end mill (1).

9. End mill (1) according to one of the preceding claims, **characterised in that** the cutting region (12) has a total of four cutters (4; 5; 6; 7), of which a first cutter (4) and a third cutter (6) as well as a second cutter (5) and a fourth cutter (7) diametrally oppose one another and the point thinning (13) is provided between the second cutter (5) and the third cutter (6) as well as between the first cutter (4) and the fourth cutter (7), wherein peripherally of the cutting region (12), the angle between the first cutter (4) and the fourth cutter (7) and between the second cutter (5) and the third cutter (6) is greater than 90° less than 110°, in particular equal to 100°.

10. End mill (1) according to claim 9, **characterised in that** between the first cutter (4) and the second cutter (5) as well as between the third cutter (6) and the fourth cutter (7), further point thinning (16) is provided which has an angle of 20° to 40° with respect to the rotational axis (9) of the end mill (1).

11. End mill (1) according to one of the preceding claims, **characterised in that** the cutters (4; 5; 6; 7) on the end-face side (12) of the cutting region (3) have a negative crown.

12. End mill (1) according to one of the preceding claims, **characterised in that** the core (8) of the cutting region (12) has two conical sections (19; 20) with different conicity.

## Revendications

1. Fraise à queue (1), de préférence en carbure monobloc, avec une section de fixation (2) et une zone de coupe (3), dans laquelle la zone de coupe (3) est formée par une partie centrale (8) et trois, quatre ou cinq lames (4 ; 5 ; 6 ; 7) s'étendant en forme d'hélice autour d'un axe de rotation (9) de la fraise à queue (1), disposées autour de la partie centrale (8), dont chacune présente respectivement une lame principale (10) côté périphérie et une lame secondaire (11) au niveau d'un côté frontal (12) de la zone de coupe (3), dans laquelle
au moins une lame (4 ; 5 ; 6 ; 7) présente au niveau du côté frontal (12) de la zone de coupe (3) une unique face frontale (15) plane ou en permanence incurvée, laquelle délimite au niveau du côté frontal (12) la lame (4 ; 5 ; 6 ; 7) dans le sens longitudinal de la fraise à queue (1), **caractérisée en ce que**
la lame secondaire (11) de chaque lame (4, 5, 6, 7) présente, dans le cas d'une observation depuis le côté frontal (12) de la zone de coupe (3), une indentation (17), qui débute à un éloignement de l'axe de rotation (9), qui correspond à 0,2 à 0,35 fois le diamètre de zone de coupe, et s'étend dans une direction radiale sur une longueur, qui correspond à 0,1 à 0,25 fois le diamètre de zone de coupe, dans laquelle le rayon de l'indentation (17) est égal à 0,1 à 0,25 fois le diamètre de zone de coupe.

2. Fraise à queue (1) selon la revendication 1, **caractérisée en ce que** la face frontale (15) de chaque lame (4 ; 5 ; 6 ; 7) présente au niveau de la lame secondaire (11) un angle libre compris entre 5° et 7°, en particulier égal à 6°, par rapport à un plan perpendiculaire par rapport à l'axe de rotation (9) de la fraise à queue (1).

3. Fraise à queue (1) selon la revendication 1 ou 2, **caractérisée en ce qu'**au moins une lame secondaire (11) présente un profil incurvé.

4. Fraise à queue (1) selon l'une quelconque des revendications 1 à 3, **caractérisée en ce qu'**au moins une lame secondaire (11) présente dans une zone radialement extérieure une saillie centrale.

5. Fraise à queue (1) selon l'une quelconque des revendications précédentes, **caractérisée en ce qu'**est prévu au niveau du côté frontal (12) de la zone de coupe (3) un appointissage (13) de la partie centrale (8) entre deux lames (4 ; 5 ; 6 ; 7) se jouxtant l'une l'autre, lequel présente un angle allant de 30° à 40° par rapport à l'axe de rotation (9) de la fraise à queue (1).

6. Fraise à queue (1) selon la revendication 5, **caractérisée en ce que** l'appointissage (13) est réalisé dans la zone du côté frontal (12) de la zone de coupe (3) sous la forme d'un évidement se rapprochant en direction de l'axe de rotation (8) de la fraise à queue (1) dans une direction allant de la section de fixation (2) vers le côté frontal (12) de la zone de coupe (3).

7. Fraise à queue (1) selon la revendication 5 ou 6, **caractérisée en ce que** l'appointissage (13) s'étend dans la direction radiale sensiblement jusqu'à l'axe de rotation (9) de la fraise à queue (1) et délimite la lame secondaire (11) dans la zone de l'axe de rotation (9) de la fraise à queue (1).

8. Fraise à queue (1) selon l'une quelconque des revendications précédentes, **caractérisée en ce que** les lames (4 ; 5 ; 6 ; 7) sont réparties de manière non homogène dans le sens périphérique de la fraise à queue (1).

9. Fraise à queue (1) selon l'une quelconque des revendications précédentes, **caractérisée en ce que** la zone de coupe (3) présente au total quatre lames (4 ;5 ; 6 ; 7), dont une première lame (4) et une troisième lame (6) ainsi qu'une deuxième lame (5) et une quatrième lame (7) sont diamétralement opposées, et l'appointissage (13) est prévu entre la deuxième lame (5) et la troisième lame (6) ainsi qu'entre la première lame (4) et la quatrième lame (7), dans laquelle l'angle entre la première lame (4) et la quatrième lame (7) et entre la deuxième lame (5) et la troisième lame (6) est supérieur à 90° et inférieur à 110°, en particulier est égal à 100° dans le sens périphérique de la zone de coupe (12).

10. Fraise à queue (1) selon la revendication 9, **caractérisée en ce qu'**est prévu entre la première lame (4) et la deuxième lame (5) ainsi qu'entre la troisième lame (6) et la quatrième lame (7) un autre appointissage (16), qui présente un angle allant de 20° à 40° par rapport à l'axe de rotation (9) de la fraise à queue (1).

11. Fraise à queue (1) selon l'une quelconque des revendications précédentes, **caractérisée en ce que** les lames (4 ; 5 ; 6 ; 7) présentent au niveau du côté frontal (12) de la zone de coupe (3) un affûtage concave.

12. Fraise à queue (1) selon l'une quelconque des revendications précédentes, **caractérisée en ce que** la partie centrale (8) de la zone de coupe (12) présente deux sections (19 ; 20) coniques à conicité différente.
